# EUROPÄISCHE PATENTSCHRIFT

(11) **EP 2 582 956 B1**
(45) Veröffentlichungstag und Bekanntmachung des Hinweises auf die Patenterteilung: **21.02.2018**
(21) Anmeldenummer: 11725354.2
(22) Anmeldetag: 15.06.2011
(51) Int. Cl.: F02C 3/14, F23R 3/42

(54) **GASTURBINENBRENNKAMMERANORDNUNG IN AXIALBAUWEISE**
GAS TURBINE COMBUSTION CHAMBER ARRANGEMENT OF AXIAL TYPE OF CONSTRUCTION
ENSEMBLE CHAMBRE DE COMBUSTION DE TURBINE À GAZ EN MONTAGE AXIAL

(30) Priorität: 15.06.2010 DE 102010023816
(43) Veröffentlichungstag der Anmeldung: 24.04.2013
(73) Patentinhaber: Rolls-Royce Deutschland Ltd & Co KG, 15827 Blankenfelde-Mahlow (DE)
(72) Erfinder: NEGULESCU, Dimitrie, 14163 Berlin (DE)
(74) Vertreter: Hoefer & Partner Patentanwälte mbB
(86) Internationale Anmeldenummer: PCT/EP2011/002959
(87) Internationale Veröffentlichungsnummer: WO 2011/157418

(56) Entgegenhaltungen:
- WO-A1-2007/102807
- CH-A- 214 256
- DE-A1- 19 541 303
- DE-A1- 19 549 143
- US-A- 3 000 183

## Beschreibung

Die Erfindung bezieht sich auf eine Gasturbinenbrennkammeranordnung gemäß den Merkmalen des Oberbegriffs des Anspruchs 1.

Im Einzelnen bezieht sich die Erfindung auf eine Gasturbinenbrennkammeranordnung in Axialbauweise, welche insbesondere für eine Fluggasturbine, jedoch auch für stationäre Gasturbinen verwendbar ist.

Aus dem Stand der Technik ist es bekannt, dass die Strömung, welche einen Kompressor der Gasturbine verlässt, mittels eines Austrittsleitrades in axialer Richtung umgelenkt wird. Diese Umlenkung ist erforderlich für die Reduzierung der Strömungsgeschwindigkeiten und für eine Anpassung an die nachfolgende Brennkammer mit in herkömmlicher Weise axial angeordnetem Brenner. Die Strömung wird somit am Verdichteraustritt im Austrittsleitrad verzögert und fast vollständig in Axialrichtung umgelenkt. Anschließend durchströmt die Strömung einen Diffusor, in welchem sie in axialer Strömungsrichtung geführt und dabei verzögert wird. Nachfolgend gelangt die Strömung in ein Flammrohr bzw. in mehrere Flammrohre im Fall einer Ringbrennkammer mit gemischter Bauweise. Dort sind Einspritzdüsen angeordnet, welche ebenfalls in Axialrichtung ausgerichtet sind. Somit ergeben sich Flammen, die ebenfalls fast vollständig in Axialrichtung ausgebildet sind. Am Brennkammeraustritt werden die heißen Verbrennungsgase in einem Turbinenleitschaufelkranz auf Schallgeschwindigkeitsniveau beschleunigt und zugleich in Turbinendrehrichtung stark umgelenkt.

Diese mehrfache Umlenkung der Strömung bedingt, dass die Brennkammer oder auch die gesamte Gasturbine eine relativ große Länge aufweisen muss. Es ergibt sich hierdurch ein großes Brennkammergewicht. Weiterhin sind eine Vielzahl von Bauteilen erforderlich, die auch zu einer Kostenbelastung führen.

Ein weiterer, wesentlicher Nachteil besteht darin, dass durch die mehrfache Strömungsumlenkung, welche sich beispielsweise auf mindestens zu 120° addiert, erhebliche Strömungsverluste ergeben, welche wiederum zu einem erhöhten Brennstoffverbrauch führen und somit auch in erhöhten Schadstoffemissionen resultieren.

Aus der US 2007/0012048 A1 ist es bekannt, den Neigungswinkel der aus dem Kompressor austretenden Strömung beizubehalten oder gegebenenfalls zu erhöhen. Auch die Einspritzdüsen, die Hitzeschilder und die Axialwände der Brennkammer sind in den Winkel geneigt. Die US 2007/0012048 A1 offenbart die Merkmale des einleitenden Teils des Anspruchs 1.

Aus der in der WO 2007/102807 A1 beschriebenen Brenneranordnung ist es bekannt, die Brenner in einem Winkel zu positionieren. Dabei handelt es sich um eine Bauart, bei welcher eine Umlenkung des aus dem Verdichter austretenden Luftstromes erfolgt.

Die CH 214 256 A zeigt die Möglichkeit, die Luftströmung am Verdichteraustritt nicht gerade zu richten, sondern den schrägen Luftaustritt aus der letzten Laufschaufelreihe des Verdichters beizubehalten. Es wird dann der Luft eine schraubenförmige Bahn durch den Brennraum gegeben.

Aus der DE 195 41 303 A1 ist eine Gasturbine vorbekannt, bei welcher die einzelnen Brenner innerhalb der Brennkammer in einem Winkel angeordnet sind, wobei für einzelne Brenner unterschiedliche Winkel vorgesehen sind.

Die DE 195 49 143 A1 zeigt eine Gasturbinenringbrennkammer, bei welcher die verdichtete Luft am Verdichteraustritt eine Komponente in Radialrichtung erhält.

Aus der US 3,000,183 A ist eine Brennkammer vorbekannt, bei welcher die Brenner in einem Winkel von etwa 45° angeordnet sind. Welche Ausrichtung die zugeführte Luft aufweist, wenn sie den Verdichter verlässt und dem Diffusor über die Öffnungen zugeführt wird, ist nicht ersichtlich.

Der Erfindung liegt die Aufgabe zugrunde, eine Gasturbinenbrennkammeranordnung der eingangs genannten Art für eine mit einer Axial-Brennkammer versehene Gasturbine zu schaffen, welche bei einfachem Aufbau und einfacher, kostengünstiger Herstellbarkeit die Nachteile des Standes der Technik vermeidet.

Erfindungsgemäß wird die Aufgabe für die Merkmalskombination des Anspruchs 1 gelöst. Die Unteransprüche beschreiben weitere vorteilhafte Ausgestaltungen der Erfindung.

Erfindungsgemäß ist somit vorgesehen, dass das Diffusorelement, welches einen Teil der Brennkammeranordnung bildet, zwei Funktionsbereiche umfasst, nämlich zunächst einen ringförmigen Leitschaufelbereich, der nicht vollständig umlenkt, sowie einen nachfolgenden Diffusorbereich für konstanten Strömungsdrall (Drallerhaltung). Die Erfindung bezieht sich somit auf eine Gasturbinenbrennkammeranordnung mit einer Axial-Brennkammer und einem vorgeordneten Axial

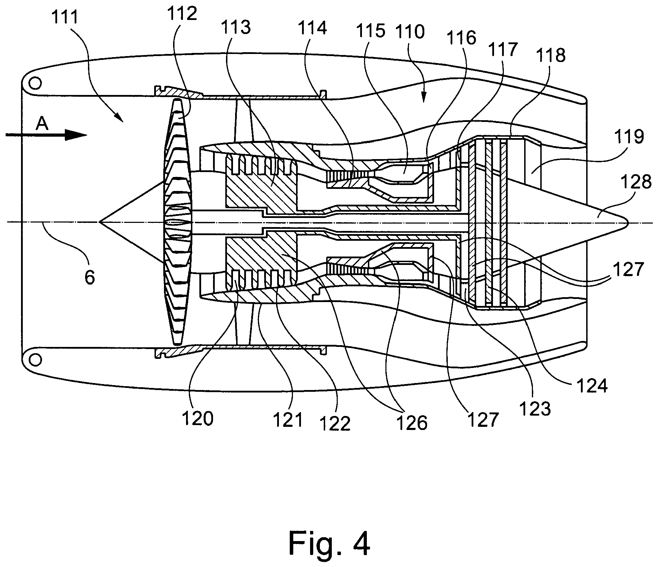

Kompressor, so wie dies nachfolgend in Verbindung mit Fig. 4 beschrieben wird. Die in einem Neigungswinkel aus dem Axial-Kompressor austretende Luftströmung wird in dem ringförmigen Leitschaufelbereich durch die dort vorgesehenen Leitschaufeln so umgelenkt, dass die Strömung in einem Winkel zwischen 28° und 32°, bevorzugterweise in einem Winkel α von 30° zur Mittelachse der Gasturbine ausgerichtet ist. Die Leitschaufel lenkt die Strömung somit um ca. 20° um, beispielsweise von einem Eintrittswinkel von 50° auf 30° am Austritt. Die somit in ihrem Neigungswinkel reduzierte Luftströmung durchströmt dann den Diffusorbereich. Dieser ist erfindungsgemäß so ausgebildet, dass sich dort keine strömungstechnisch wirksamen Strömungsleitelemente befinden. Die Strömung kann somit ungehindert durch den Diffusor durchströmen. Dabei vergrößert sich der Neigungswinkel der Strömung selbsttätig auf einen Neigungswinkel zur Längsachse zwischen 40° und 50°, bevorzugt 45°. Somit durchströmt die Strömung den Auslassbereich des Diffusorbereichs mit einem wiederum erhöhten Neigungswinkel und trifft in diesem Winkel auf die Brenner der Ringbrennkammer, welche in eben diesem Winkel zwischen 40° und 50°, bevorzugt 45°, zur Mittelachse bzw. zur Axialrichtung geneigt angeordnet sind. Die Luftströmung durchströmt somit ohne weitere Umlenkung die Brenner.

Durch die erfindungsgemäße Gestaltung des Leitschaufelbereichs, des Diffusorbereichs und der Brenner ergibt sich in der Ringbrennkammer eine Drallflamme, welche frei von den Nachteilen des Standes der Technik ist und eine optimierte Verbrennung ermöglicht. Hierbei ergibt sich eine im Vergleich zum Stand der Technik verkürzte Baulänge. Dafür wird die Flammrohrhöhe H größer angelegt, als bei herkömmlichen Brennkammern. Somit kann erfindungsgemäß die Brennkammer kürzer und leichter ausgebildet werden, als die aus dem Stand der Technik bekannten Ringbrennkammern. Da im Diffusorbereich weniger umgelenkt wurde und auch im Brennkammereintrittsbereich weniger umgelenkt werden muss, sind weniger Bauteile nötig.

Die gesamte Strömungsumlenkung, welche beim Stand der Technik mindestens 120° beträgt und zu erheblichen Störungsverlusten führt, wird durch die erfindungsgemäße Ausgestaltung auf weniger als 60° reduziert.

Die erfindungsgemäße Gasturbinenbrennkammeranordnung ermöglicht es somit, ein längenreduziertes und gewichtsreduziertes Triebwerk zu bauen. Hierdurch ergibt sich eine erhebliche Kostenersparnis. Die erfindungsgemäße Gasturbinenbrennkammeranordnung ist auch zur Verbesserung bestehender Brennkammerkonzepte geeignet.

Erfindungsgemäß ist es besonders vorteilhaft, wenn im Brenner auch die Flammrohre und die Hitzeschilder im Winkel der Brennkammerachse geneigt angeordnet sind. Hierdurch wird eine verbesserte Durchströmung der Brennkammer und eine verbesserte Flammausbildung gewährleistet.

Die erfindungsgemäße Ringbrennkammer weist bevorzugterweise für das Flammrohr ein Verhältnis von Länge zu Höhe von kleiner 1,4 auf. Hierdurch ist eine besonders kompakte Bauweise der Gasturbinenbrennkammeranordnung möglich.

Besonders günstig ist es, wenn stromab der Ringbrennkammer ein mit Turbinenleitschaufeln versehener Turbinenleitschaufelkranz vorgesehen ist, welcher Turbinenleitschaufeln umfasst, welche zur weiteren, zusätzlichen Umlenkung der in den Turbinenleitschaufelkranz eintretenden Strömung in einem Winkelbereich zwischen 15° und 20°, bevorzugt 17°, ausgebildet ist. Hierdurch ist es möglich, die Strömung in optimaler Weise der ersten Turbinenstufe zuzuführen. Dabei ist es erfindungsgemäß besonders günstig, wenn die Turbinenleitschaufeln in einer ausgeprägt konvergenten Ringdüse integriert sind.

Sofern es bautechnisch erforderlich ist, in dem Diffusorbereich radiale Streben vorzusehen, so sind diese erfindungsgemäß zur Drallerhaltung so ausgebildet, dass sie strömungstechnisch nicht wirksam sind, so dass sich die Strömung, welche mit einem Winkel von 45° bis 55° aus dem Kompressor austritt, nach Durchlauf durch den Leitschaufelbereich und Umlenkung in einen Neigungswinkel von 28° bis 32° (bevorzugt 30°) wieder von selbst in einer Winkelrichtung ausrichten kann, um in einem Winkel zwischen 40° und 50°, bevorzugt 45°, in die geneigten Brenner zu strömen.

Der erfindungsgemäß ausgebildete Leitschaufelbereich ist somit so ausgelegt, dass sich eine kleinere Winkelumlenkung als bei den aus dem Stand der Technik bekannten Konstruktionen ergibt. Dies führt zu einer Reduzierung der Strömungsverluste. Weiterhin ist es möglich, die Anzahl der Leitschaufeln zu reduzieren.

Der erfindungsgemäße Diffusorbereich ist als Drallströmungsdiffusor ausgebildet, entlang dessen Lauflänge der Strömungswinkel der Strömung vor dem Leitschaufelbereich wiederhergestellt wird. Dies erfolgt selbsttätig durch eine Umlenkung der Strömung entgegengesetzt der Umlenkung in dem Leitschaufelbereich. Der erfindungsgemäße Diffusor ist somit rippenfrei ausgelegt. Dies bedeutet, dass keine strömungstechnisch wirksamen Strömungsleitelemente vorgesehen sind. Weiterhin ergibt sich erfindungsgemäß, dass die Kanalhöhe am austritt des Diffusorbereichs wesentlich größer als bei aus dem Stand der Technik bekannten Konstruktionen ist. Dies führt zu einer Verbesserung der Anströmung der Brennkammer sowie zu der erfindungsgemäß geschaffenen Möglichkeit, eine in Radialrichtung dickere Brennkammer zu verwenden.

Das nachfolgende Ringflammrohr der Brennkammer weist Einspritzdüsen auf, welche in dem sich beim Austritt aus dem Diffusorbereich ergebenden Winkel geneigt sind. Dieser Winkel beträgt bevorzugt 45° zur Mittelachse. Auch die im Flammrohrdom vorgesehenen Hitzeschilde sind in dem genannten Winkel geneigt. Erfindungsgemäß ist es möglich, die Anzahl der Einspritzdüsen passend zu dem gewünschten Brennkammerauslegungskonzept (magere Verbrennung oder reiche Verbrennung) auszuwählen und zu dimensionieren. Erfindungsgemäß ist es somit möglich, eine sehr kurze, jedoch radial ausgeprägte Brennkammer oder ein Flammrohr zu erhalten.

Am Austritt der Ringbrennkammer benötigt der erfindungsgemäß ausgebildete Turbinenleitschaufelkranz nur etwa die Hälfte der Leitschaufeln einer konventionellen Brennkammer, da erfindungsgemäß lediglich eine weitaus geringere Umlenkung vorgenommen wird. Diese beträgt nur ca. 25% der Umlenkung der Leitschaufeln einer konventionellen Brennkammer. Die Leitschaufeln sind erfindungsgemäß bevorzugt filmgekühlt und sind bevorzugt in einer ausgeprägt konvergenten Ringdüse integriert. Diese gewährleistet die Beschleunigung der Verbrennungsgrade bis zum Schallgeschwindigkeitsniveau, wobei die zahlenmäßig wenigen umlenkenden Turbinenleitschaufeln die Strömungsrichtung zum nachfolgenden Turbinenrad anpassen.

Im Folgenden wird die Erfindung anhand eines Ausführungsbeispiels in Verbindung mit der Zeichnung beschrieben. Dabei zeigt:
- Fig. 1: einen Abwicklungsschnitt durch die Gasturbinenbrennkammeranordnung,
- Fig. 2: eine Schnittansicht durch die Ringbrennkammer,
- Fig. 3: eine Schnittansicht eines abgewandelten Ausführungsbeispiels analog Fig. 1, und
- Fig. 4: eine schematische Darstellung eines Gasturbinentriebwerks gemäß der vorliegenden Erfindung

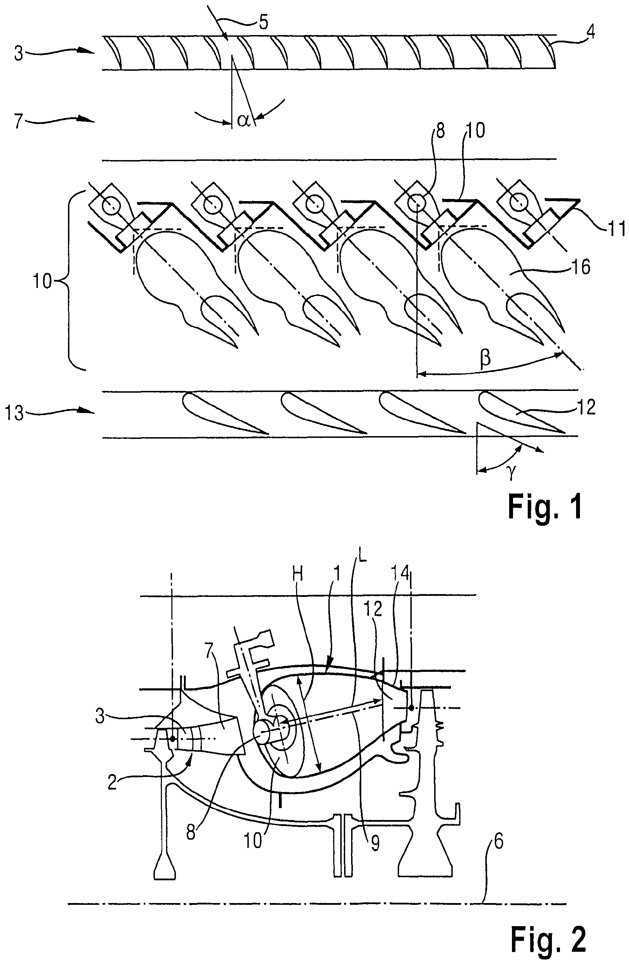

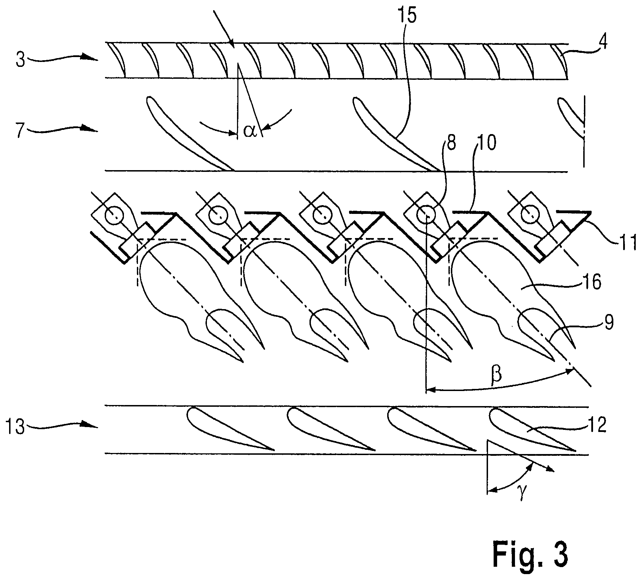

Die erfindungsgemäße Gasturbinenbrennkammeranordnung weist eine Ringbrennkammer 1 auf. Stromauf der Ringbrennkammer 1 ist ein Diffusorelement 2 vorgesehen, welches, wie sich insbesondere aus den Fig. 1 und 3 ergibt, zunächst einen Leitschaufelbereich 3 mit Leitschaufeln 4 und einen nachfolgenden Diffusorbereich umfasst. Die Leitschaufeln 4 des Leitschaufelbereichs 3 sind so angeordnet und ausgebildet, dass sie eine aus einem Kompressor eintretende Strömung 5 umlenken. Die Umlenkung erfolgt so, dass die Strömung beim Austritt aus dem Leitschaufelbereich 3 in einem Winkel α zu einer Mittelachse 6 der Gasturbine geneigt ist. Der Winkel α beträgt 28° bis 32°, bevorzugt 30°.

Beim Durchlauf durch den Diffusorbereich 7 erhöht sich, da es sich um einen Drallströmungsdiffusor handelt, der Neigungswinkel der Strömung wieder von selbst, so dass die Strömung in einem Winkel β zwischen 40 und 50°, bevorzugt 45°, den Brennern 8 zugeführt wird. Die Brenner 8 sind so angeordnet, dass eine jeweilige Brennerachse 9 ebenfalls in dem Winkel β zur Mittelachse 6 geneigt ist. Analog sind auch die Leitbleche am Flammrohreintritt 10 und die Hitzeschilde 11 sowie die im Einzelnen nicht dargestellten Einspritzdüsen (Brenner) in dem Winkel β geneigt.

Die aus dem Flammrohr 10 austretende Strömung wird erfindungsgemäß einem Turbinenleitschaufelkranz 13 mit Turbinenleitschaufeln 12 zugeführt. In dem Turbinenleitschaufelkranz erfolgt eine weitere Neigung der Strömung um einen Winkel zwischen 15 und 20, bevorzugt 17° (eine zusätzliche Umlenkung von 17°). Die Strömung verlässt somit den Turbinenleitschaufelkranz 13 in einem Winkel γ, der größer ist als 65°.

Die Fig. 2 zeigt, dass der Turbinenleitschaufelkranz im Bereich einer Ringdüse 14 angeordnet ist. Weiterhin zeigt die Fig. 2 die erfindungsgemäß vorgesehene, vergrößert ausgeprägte Höhe H des Flammrohrs 10.

Das Bezugszeichen 16 bezeichnet eine schematisch eingezeichnete Drallflamme.

Die Fig. 3 zeigt ein im Gegensatz zu dem Ausführungsbeispiel der Fig. 1 abgewandeltes Ausführungsbeispiel, bei welchem in dem Diffusorbereich 7 zusätzliche Streben 15 angeordnet sind, welche lediglich der Stabilität und Abstützung des Diffusorkanals dienen, strömungstechnisch jedoch nicht wirksam sind.

Wie oben beschrieben, erfolgt somit die Umlenkung der Strömung durch die Leitschaufeln 4 um einen Betrag der entgegengesetzten Umlenkung im Diffusorbereich 7, so dass sich folgendes ergibt: β - α = 20°. Die Umlenkung der Leitschaufeln 12 resultiert in einem Winkel γ > 65°. Es ergibt sich: γ - β = 17°. Die Umlenkung beträgt somit ca. 17°. Somit lenken die Leitschaufeln 12 die Strömung um 17° zusätzlich um und bringen somit den Strömungsverlauf am Austritt auf einen Winkel von beispielsweise γ = 70°.

Das Gasturbinentriebwerk 110 gemäß Fig. 4 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen axial wirkenden Zwischendruckkompressor 113, einen axial wirkenden Hochdruckkompressor 114, eine axial durchströmte Brennkammer 115, eine Hochdruckturbine 116, eine Zwischendruckturbine 117 und eine Niederdruckturbine 118 sowie eine Abgasdüse 119, die sämtlich um eine zentrale Triebwerksachse 6 angeordnet sind.

Der Axial-Zwischendruckkompressor 113 und der Axial-Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Triebwerksgehäuse 121 in einem ringförmigen Strömungskanal durch die Kompressoren 113, 114 vorstehen. Die axialen Kompressoren weisen weiter eine Anordnung von Kompressorlaufschaufeln 122 auf, die radial nach außen von einer drehbaren Trommel oder Scheibe 126 vorstehen, die mit Naben 127 der Hochdruckturbine 116 bzw. der Zwischendruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 127 vorstehen. Die Kompressortrommel oder Kompressorscheibe 126 und die darauf angeordneten Schaufeln 122 sowie die Turbinenrotornabe 127 und die darauf angeordneten Turbinenlaufschaufeln 124 drehen sich im Betrieb um die Triebwerksachse 6.

### Bezugszeichenliste

- 1: Ringbrennkammer
- 2: Diffusorelement
- 3: Leitschaufelbereich
- 4: Leitschaufel
- 5: Eintretende Strömung
- 6: Mittelachse (Triebwerksachse)
- 7: Diffusorbereich
- 8: Einspritzdüse des Brenners
- 9: Brennerachse
- 10: Flammrohr
- 11: Hitzeschild
- 12: Turbinenleitschaufel
- 13: Turbinenleitschaufelkranz
- 14: Ringdüse
- 15: Strebe
- 16: Drallflamme
- 110: Gasturbinentriebwerk
- 111: Lufteinlass
- 112: im Gehäuse umlaufender Fan
- 113: Axial-Zwischendruckkompressor
- 114: Axial-Hochdruckkompressor
- 115: Brennkammer
- 116: Hochdruckturbine
- 117: Zwischendruckturbine
- 118: Niederdruckturbine
- 119: Abgasdüse
- 120: Leitschaufeln
- 121: Triebwerksgehäuse
- 122: Kompressorlaufschaufeln
- 123: Leitschaufeln
- 124: Turbinenschaufeln
- 126: Kompressortrommel oder -scheibe
- 127: Turbinenrotornabe
- 128: Auslasskonus

## Patentansprüche

1. Gasturbinenbrennkammeranordnung mit einer Ringbrennkammer (1) sowie mit einem in Strömungsrichtung vor der Ringbrennkammer (1) angeordneten, einen Ringkanal umfassenden Diffusorelement (2) sowie mit einem dem Diffusorelement (2) vorgeordneten Axialkompressor (113, 114), **dadurch gekennzeichnet, dass** das Diffusorelement (2) einen ringförmigen Leitschaufelbereich (3) aufweist, in welchem Leitschaufeln (4) angeordnet sind, welche zur Umlenkung einer eintretenden Strömung (5) in einem Winkel (α) in einem Bereich zwischen 28° und 32° zu einer Mittelachse (6) der Gasturbine ausgebildet sind, und dass stromab des Leitschaufelbereichs (3) ein nicht mit strömungstechnisch wirksamen Strömungsleitelementen versehener Diffusorbereich (7) angeordnet ist, wobei in der Ringbrennkammer (1) angeordnete Brenner (8) mit ihren Brennerachsen (9) in einem Winkel (β) zwischen 40° und 50° zur Mittelachse (6) geneigt angeordnet sind.

2. Gasturbinenbrennkammeranordnung nach Anspruch 1, **dadurch gekennzeichnet, dass** Flammrohre (10) und Hitzeschilde (11) in der Brennerachse (9) geneigt angeordnet sind.

3. Gasturbinenbrennkammeranordnung nach Anspruch 1 oder 2, **dadurch gekennzeichnet, dass** die Ringbrennkammer (1) zur Ausbildung von Drallflammen ausgebildet ist.

4. Gasturbinenbrennkammeranordnung nach einem der Ansprüche 1 bis 3, **dadurch gekennzeichnet, dass** die Ringbrennkammer (1) ein Verhältnis von Länge (L) zur Höhe (H) von L/H < 1,4 aufweist.

5. Gasturbinenbrennkammeranordnung nach einem der Ansprüche 1 bis 4, **dadurch gekennzeichnet, dass** stromab der Ringbrennkammer (1) ein mit Turbinenleitschaufeln (12) versehener Turbinenleitschaufelkranz (13) angeordnet ist, welcher Turbinenleitschaufeln (12) umfasst, welche zur Umlenkung der in den Turbinenleitschaufelkranz eintretenden Strömung in einem Winkel in einem Bereich zwischen 65° und 70° ausgebildet sind.

6. Gasturbinenbrennkammeranordnung nach Anspruch 5, **dadurch gekennzeichnet, dass** die Turbinenleitschaufeln (12) in einer konvergenten Ringdüse (14) integriert sind.

7. Gasturbinenbrennkammeranordnung nach einem der Ansprüche 1 bis 6, **dadurch gekennzeichnet, dass** in dem Diffusorbereich strömungstechnisch nicht wirksame Streben (15) angeordnet sind.

## Claims

1. Gas-turbine combustion chamber arrangement having an annular combustion chamber (1), a diffuser element (2) arranged upstream of the annular combustion chamber (1) in the flow direction, said diffuser element (2) including an annular duct, and an axial compressor (113, 114) arranged upstream of the diffuser element (2), **characterized in that** the diffuser element (2) features an annular stator vane area (3) in which stator vanes (4) are arranged, which for deflecting an incoming flow (5) are provided at an angle (α) in a range between 28° and 32° relative to a center axis (6) of the gas turbine and that downstream of the stator vane area (3) a diffuser area (7) is arranged, said diffuser area (7) not being provided with flow-guiding elements affecting the flow, where burners (8) arranged in the annular combustion chamber (1) are provided inclined with their burner axes (9) at an angle (β) between 40° and 50° relative to the center axis (6).

2. Gas-turbine combustion chamber arrangement in accordance with Claim 1, **characterized in that** flame tubes (10) and heat shields (11) are arranged inclined in the burner axis (9).

3. Gas-turbine combustion chamber arrangement in accordance with Claim 1 or 2, **characterized in that** the annular combustion chamber (1) is designed for the formation of swirl flames.

4. Gas-turbine combustion chamber arrangement in accordance with one of the Claims 1 to 3, **characterized in that** the annular combustion chamber (1) has a length (L) to height (H) ratio of L/H < 1.4.

5. Gas-turbine combustion chamber arrangement in accordance with one of the Claims 1 to 4, **characterized in that** downstream of the annular combustion chamber (1) a turbine stator vane ring (13) provided with turbine stator vanes (12) is arranged, said turbine stator vane ring (13) including turbine stator vanes (12) which for deflecting the flow entering the turbine stator vane ring are provided at an angle in a range between 65° and 70°.

6. Gas-turbine combustion chamber arrangement in accordance with Claim 5, **characterized in that** the turbine stator vanes (12) are integrated in a convergent annular nozzle (14).

7. Gas-turbine combustion chamber arrangement in accordance with one of the Claims 1 to 6, **characterized in that** struts (15) are arranged in the diffuser area that do not affect the flow.

## Revendications

1. Système de chambre de combustion de turbine à gaz avec une chambre de combustion annulaire (1) ainsi qu'un élément diffuseur (2) comprenant un canal annulaire, disposé en amont de la chambre de combustion (1) dans le sens d'écoulement ainsi qu'un compresseur axial (113, 114) disposé en amont de l'élément diffuseur (2), **caractérisé en ce que** l'élément diffuseur (2) présente une zone à aubes directrices (3) de forme annulaire dans laquelle sont disposées des aubes directrices (4) qui, pour dévier un écoulement entrant (5), sont positionnées à un angle (α) compris entre 28° et 32° par rapport à un axe médian (6) de la turbine à gaz et qu'est disposée, en aval de la zone à aubes directrices (3), une zone de diffuseur (7) non pourvue d'éléments de guidage affectant l'écoulement, sachant que des brûleurs (8) positionnés dans la chambre de combustion annulaire (1) sont disposés inclinés avec leurs axes (9) de brûleurs dans un angle (β) compris entre 40° et 50° par rapport à l'axe médian (6).

2. Système de chambre de combustion de turbine à gaz selon la revendication n° 1, **caractérisé en ce que** des tubes à flammes (10) et des écrans thermiques (11) sont disposés inclinés dans l'axe des brûleurs (9).

3. Système de chambre de combustion de turbine à gaz selon la revendication n° 1 ou n° 2, **caractérisé en ce que** la chambre de combustion annulaire (1) est conçue pour former des flammes tourbillonnantes.

4. Système de chambre de combustion de turbine à gaz selon une des revendications n° 1 à n° 3, **caractérisé en ce que** la chambre de combustion annulaire (1) présente un rapport de la longueur (L) sur la hauteur (H) tel que L/H > 1,4.

5. Système de chambre de combustion de turbine à gaz selon une des revendications n° 1 à n° 4, **caractérisé en ce qu'**en aval de la chambre de combustion annulaire (1) est disposée une couronne d'aubes directrices de turbine (13) pourvue d'aubes directrices de turbine (12), laquelle couronne comprend des aubes directrices de turbine (12) qui, pour dévier l'écoulement entrant dans la couronne d'aubes directrices de turbine, sont positionnées à un angle compris entre 65° et 70°.

6. Système de chambre de combustion de turbine à gaz selon la revendication n° 5, **caractérisé en ce que** les aubes directrices de turbine (12) sont intégrées à une tuyère annulaire convergente (14).

7. Système de chambre de combustion de turbine à gaz selon une des revendications n° 1 à n° 6, **caractérisé en ce que** des montants n'affectant pas l'écoulement (15) sont disposés dans la zone de diffuseur.
